Europäisches Patentamt

European Patent Office

Office européen des brevets

(19)

(11) Publication number: **0 537 932 A2**

# EUROPEAN PATENT APPLICATION

(12)

(21) Application number: **92309081.5**

(22) Date of filing: **05.10.92**

(51) Int. Cl.⁵: **H04N 7/133**

(30) Priority: **15.10.91 US 776128**

(43) Date of publication of application:
**21.04.93 Bulletin 93/16**

(84) Designated Contracting States:
**DE FR GB IT**

(71) Applicant: **International Business Machines
Corporation
Old Orchard Road
Armonk, N.Y. 10504(US)**

(72) Inventor: **Parker, Sheppard Hall
407 Church Street
Georgetown, Texas 78626(US)**
Inventor: **Polk, Darryl Ray
9102 Balcones Club Drive
Austin, Texas 78750(US)**

(74) Representative: **Moss, Robert Douglas
IBM United Kingdom Limited Intellectual
Property Department Hursley Park
Winchester Hampshire SO21 2JN (GB)**

(54) **Image compression.**

(57) Apparatus and method for improved Joint Photographic Experts Group (JPEG) decompression of image information is disclosed. A processor is used to parse image information into partially decompressed information a portion at a time. Then, the processor or auxiliary digital signal processor identifies non-zero value dimensions for each block of partially decompressed information and decompresses each of the blocks of partially decompressed information based on the non-zero value dimensions of the information. Finally, the processor is employed to store and/or display the decompressed information. The decompression steps include parsing, Huffman decoding, run length decoding, unzigzagging, dequantizing, inverse discrete cosine transforming, and interleaving the decompressed information for subsequent display.

FIG. 3

EP 0 537 932 A2

This invention generally relates to improvements in compression of image information and more particularly to enhancing discrete cosine transformation for use in compressing image information.

The invention provides an innovative approach for compressing image information which reduces the processing time associated with prior art techniques. Image compressing and decompressing such as a Huffman compression are well known as suggested in the paper written by Huffman, David A., "A Method for the Construction of Minimum-Redundancy Codes," Proceedings of the I.R.E., September 1952. Also, compression of image data is known in the prior art. The most current example of a compression technique is the work conducted by the Joint Photographic Experts Group (JPEG). This group published a JPEG standard document, JPEG-8-R8. Accredited Standards Committee X3, Information Systems, August 17, 1990, American Standards Institute, 311 First Street NW, Suite 500, Washington, DC 20001-2178; hereinafter: (JPEG standard document).

Other examples of advancements in the state of the image processing art include US Patent 4,870,695 to Gonzales et al. This patent discloses an entropy coder/decoder for grayscale image information. However, it does not disclose or suggest any improvements in JPEG processing.

A first aspect of the present invention is to provide an apparatus for decompressing image information, comprising: first processor means for parsing the image information into partially de-compressed information; second processor means for identifying non-zero value dimensions for each block of partially decompressed information and decompressing each of the blocks of partially decompressed information based on the non-zero value dimensions into decompressed image information; and storage means for saving the decompressed information.

In a second aspect, the invention provides a method for decompressing image information, comprising the steps of: (a) parsing the image information into partially de-compressed information; (b) identifying non-zero value dimensions for each block of partially decompressed information and decompressing each of the blocks of partially decompressed information based on the non-zero value dimensions into decompressed image information; and (c) storing the decompressed image information.

The invention thus improves JPEG compression techniques by reducing the computations required for image decompression by identifying the non-zero portion of the data to be processed and processing only the non-zero portion.

This and other benefits of the present invention are preferably accomplished by the operation of an algorithm in the memory of a processor. The processor determines the predominantly non-zero dimensions of the partially decompressed image information supplied by the host computer. These dimensions are used to significantly reduce the number of computations required to decompress the image information.

The invention will now be described by way of example with reference to the accompanying drawings in which:

Figure **1** is a block diagram of a host computer in accordance with the subject invention;

Figure **2** is a block diagram of an audio capture and playback apparatus in accordance with the subject invention;

Figure **3** is a flow diagram of decompression processing in accordance with the present invention; and

Figure **4** is a PRIOR ART detailed flow diagram of the compression processing in accordance with the invention;

Figure **5** is a detailed flow diagram of the decompression processing in accordance with the invention; and

Figure **6** is a detailed diagram of the zigzagging and run-length processing in accordance with the present invention.

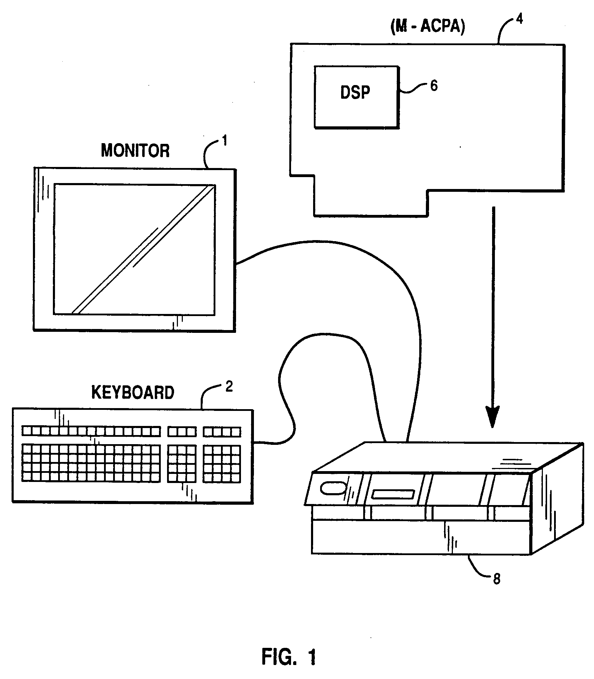

Referring to Figure **1**, a block diagram of a general purpose host computer such as the IBM Personal System/2 (PS/2) is set forth. The system unit **8** includes a processor, power supply and a bus for attaching various adapter cards for controlling a disk drive, memory, diskette drive and a multimedia audio capture playback adapter (M-ACPA) **4**. The M-ACPA includes a Digital Signal Processor (DSP) **6** to manipulate audio and image information. Other facilities are provided to attach a keyboard **2** and a monitor **1**.

Joint Photographic Experts Group (JPEG) compression and decompression can be done strictly on a host computer, such as the IBM PS/2. However, having the host computer on which the application is running attempt to do the complex calculations required by JPEG compression and decompression algorithms is not practical. The host computer is not optimized for these types of calculations

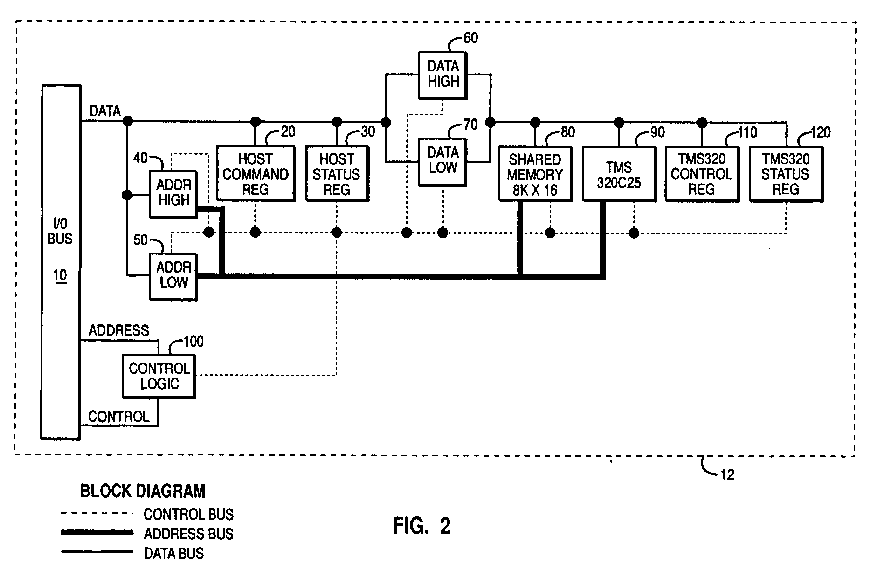

The JPEG image compression processing can be more efficiently performed on an auxiliary processor. A Digital Signal Processor (DSP) **90** in the DSP subsystem of the computer as set forth in Figure **2** and shown in Figure **1** at **6** is an optimal choice for compression processing. Referring to Figure **2**, the I/O Bus **10** is a Micro Channel or PC I/O bus which allows the DSP subsystem **12** to communicate to a PS/2 or other PC computer. Using the I/O bus, the host computer passes information to the DSP subsystem **12** employing a command register **20**, status register **30**, address high byte counter **40**, address low byte counter **50**, data high byte bidirectional latch **60**, and a data low byte bidirectional latch **70**.

The host command and host status registers are used by the host to issue commands and monitor the status of the DSP subsystem **12**. The address and data latches **60 & 70** are used by the host to access the shared memory **80** which is an 8K x 16 bit fast static RAM on the DSP subsystem **12**. The shared memory **80** is a means for communication between the host (personal computer / PS/2) and the Digital Signal Processor (DSP) **90**. This memory is shared in the sense that both the host computer and the DSP **90** can access it.

A memory arbiter, part of the control logic **100**, prevents the host and the DSP **90** from accessing the memory at the same time. The shared memory **80** can be divided so that part of the information is employed to store logic (algorithms) used to control the DSP **90**. The DSP **90** has its own control registers **110** and status registers **120** for issuing commands and monitoring the status of other parts of the DSP subsystem **12**.

For an overview of what the DSP subsystem **12** is doing, consider how a single 8 X 8 block of pixels is compressed. The host computer transfers the block of pixels to shared memory. The host then interrupts the DSP subsystem **12** via **100** to indicate that some data is available for compression. The DSP **90** compresses the information into the shared memory and then informs the host computer via the I/O bus **10** that compressed data is ready for the host to read. The host gets this data over the I/O bus **10**, completes the compression processing for this block of data, and stores it to the host computer RAM.

The control logic **100** prevents the host computer and the DSP **90** from accessing the shared memory **80** at the same time. The procedure described above continues until the complete image has been compressed. While the host computer is reading and writing data to and from the shared memory **80**, the DSP **90** is compressing the current 8 x 8 block of data into the shared memory **80**.

Decompressing image data works in generally the same way. The host computer transfers some compressed data to shared memory and then interrupts the DSP **90** to signify that the DSP subsystem **12** should decompress the compressed data. In the subject invention, the host computer gets code for controlling the DSP **90** from its memory or disk and transfers it to the shared memory **80** through the I/O bus **10**. The DSP **90**, under the control of the code, takes the compressed data and decompresses it into image information under the control of the code, and places it in the shared memory **80**. These compression steps are repeated until the entire image has been decompressed. During compression and decompression, the DSP **90** executes under the control of the code in parallel with the host processor. The host computer transfers data back and forth over the I/O bus **10**.

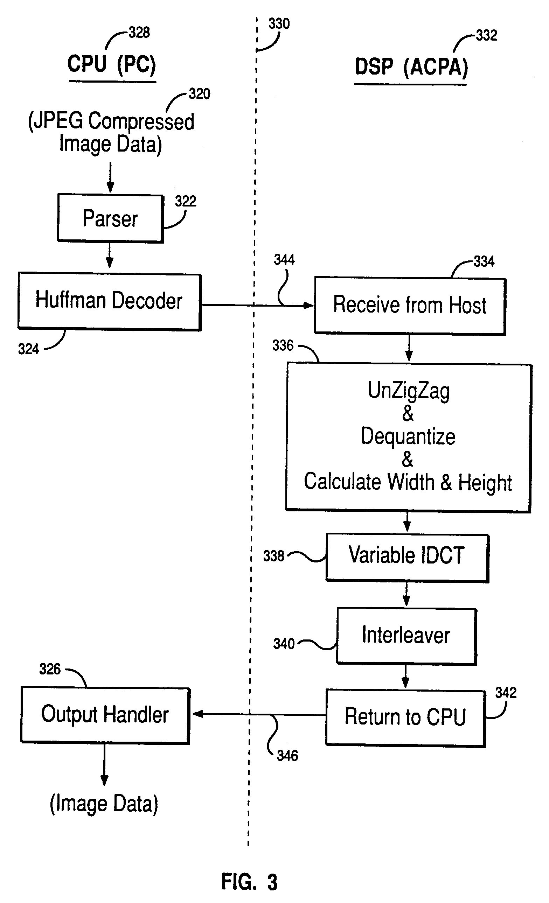

Figure 3 provides a high level block diagram of the decompression processing in accordance with the subject invention. The compressed file **320** contains a number of "marker codes" that define what the next X number of bytes represent. The compressed **320** file is parsed in function block **322** and all the pertinent information is separated. Then, the compressed image data goes through a Huffman Decoder in function block **324** as described in the JPEG standard document. A Huffman decoder is sometimes referred to as a "Statistical Decoder". It consists of a table lookup process that matches bytes with other bytes in the table and replaces the plurality of bytes with a single byte representing the entry in the table. Compressing and decompressing files using the Huffman technique is well known in the prior art.

Huffman coding typically makes a first pass through the information and determines the most popular bytes of information and construct a table based on the information. Then, the image is encoded. JPEG does not make a first pass through the information. The table is defined first and the information is encoded based on the default table. The host processor passes the encoded block of pixels **344** to the DSP subsystem **332** which is received in the shared memory **80** of Figure 2 as shown in function block **334**.

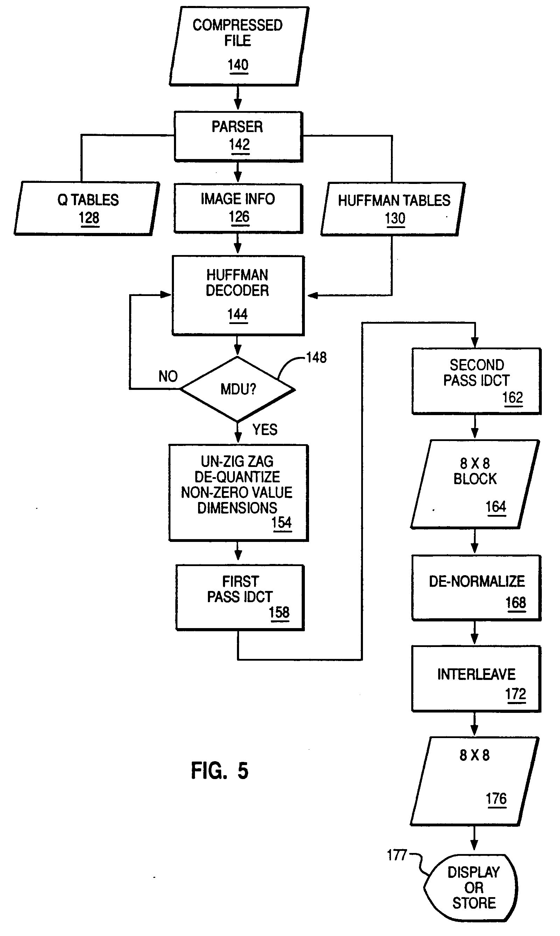

The DSP subsystem **332** begins the decompression processing at function block **336**. The DSP un-zigzags, dequantizes, and calculates width and height of the information. The details of this processing in accordance with the subject invention are set forth in the discussion of Figure **5**. Next, the information is processed by a variable Inverse Discrete Cosine Transform (IDCT) as set forth in function block **338**. Finally, the information is processed by an interleaver which places the decompressed information in shared memory **80** of Figure **2** at function block **340** and control is returned to the host processor as shown in function block **342**.

The host processor reads the decompressed information from shared memory at **346** and outputs the information to the appropriate task at function block **326**. As the block diagram illustrates with dotted control line **330**, very little of the processing occurs in the host processor. Rather, the DSP subsystem **332** performs most of the processing which frees the host processor to perform other tasks as processing occurs in parallel on the DSP subsystem.

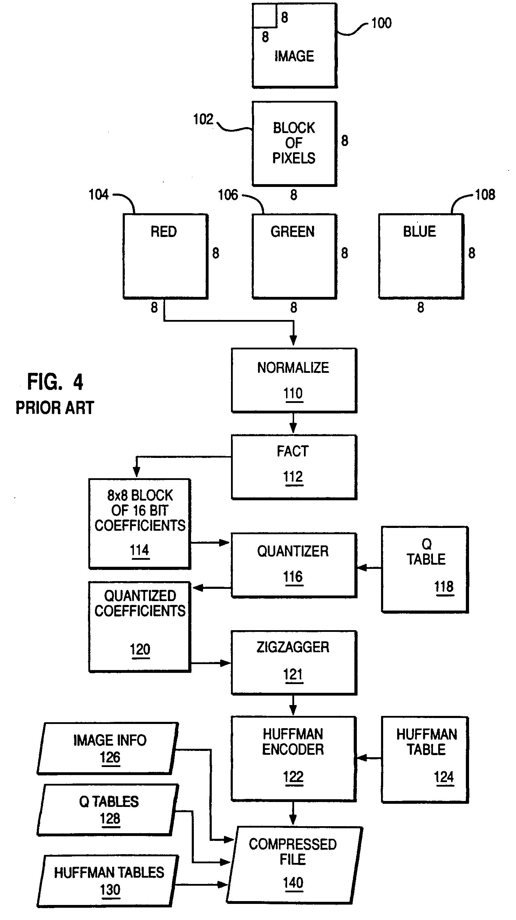

Figure **4** is a block diagram of a JPEG compression system. Block **100** represents the source image information that the compression system uses as input to the processing. Processing commences with block **102** which represents an 8 x 8 block of image information extracted from the source image information **100**. Then, block **102** is divided into its component Red, Green and Blue (RGB) portions as shown in blocks **104**, **106** and **108**. One of ordinary skill in the art will recognize that YUV, YYUV or Y or any valid coding formats as defined in the JPEG standard document can be substituted for the RGB values of the image. Then, a series of steps **110**, **112**, **114**, **116**, **118**, **120**, **122**, and **124** are applied to each of the component portions. In other words the steps are applied to the Red, then the Green, and finally to the Blue.

The series of steps commences with the normalization function **110** wherein the Red values are normalized by subtracting one-twenty eight from the byte value. Thus, two hundred-fifty-five would be one-hundred and twenty-seven and zero would be negative one-hundred twenty-eight. Next, at function block **112**, the Forward Discrete Cosine Transform (FDCT) is performed on the normalized 8 X 8 block of component values as described in the JPEG standard document. Block **114** represents the output of the FDCT processing, an 8 x 8 block of sixteen bit coefficients. This block is then quantized at function block **116**. An appropriate quantization table **118** is used to perform the quantization as specified in the JPEG standard document. The output of the quantization processing is an 8 X 8 block of sixteen bit values (quantized coefficients) **120** that are primarily composed of values equal to zero.

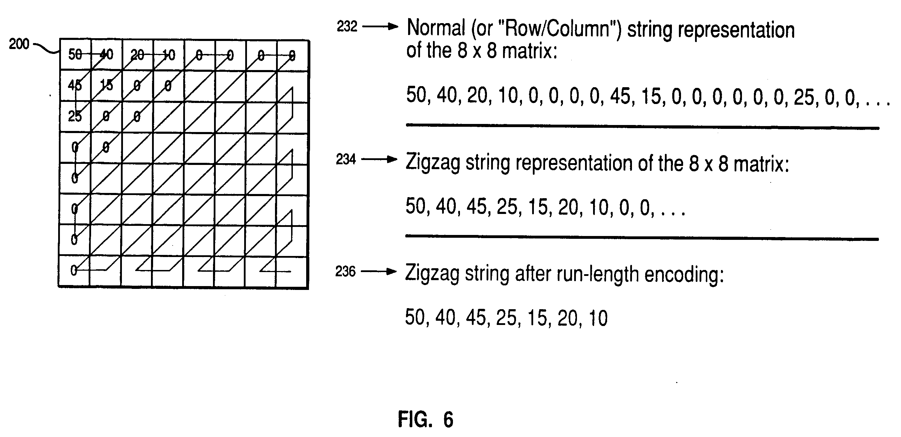

The zigzager **121** reorders the quantized coefficients into a zigzag array and run length encodes it based on the last, non-zero term in the zigzag order as defined by the JPEG standard document. Figure **6** is a detailed block diagram of the zigzag operation. At matrix **200**, a row-column ordered block is illustrated with a line tracing the zigzag pattern through the block. The normal and zigzag elements of the matrix are set forth in order at **232** and **234**. The run-length encoded zigzag string **236** is input to the Huffman encoder at block **122** of Figure **4** where the data is encoded using the Huffman table at block **124** as defined in the JPEG standard document. The compressed Red component data is then output to the compressed information file **140**. Then, the green and blue components are compressed in a similar manner via the same series of steps into the compressed information file **140**. Finally, the process is repeated for each of the rest of the 8 X 8 blocks of image information. The compressed image information is combined with image dimension information **126**, Huffman table(s) **130** and a quantization table(s) **128**.

Figure **5** is a block diagram of JPEG decompression in accordance with the invention. Decompression commences at function block **140** where the compressed information discussed with reference to Figure **4** is input to the parser **142**. The parser **142** separates the compressed image information, the image dimension information **126**, Huffman table(s) **130** and the quantization table(s) **128**. The compressed image information is parsed to form the compressed RGB components and passed to the Huffman Decoder at function block **144**. The Huffman Decoder **144** decodes the compressed information in compliance with the JPEG standard document and outputs zigzagged, quantized strings of coefficients. Decision block **148** determines if enough strings have been processed to complete an Minimum Data Unit (MDU) as defined in the JPEG standard document. If an MDU has been processed, control passes to function block **154**. Function block **154** un-zigzags, dequantizes (as set forth in the JPEG standard document), and calculates non-zero width and height of the resultant 8 X 8 coefficient matrix in accordance with the subject invention as detailed below in the detailed description of the invention.

Control then passes to function block **158** where the IDCT first pass processing transpires in accordance with the invention as detailed in below. Then, in function block **162**, the second pass of the IDCT generates the final 8 x 8 block of de-compressed, normalized image information at output block **164**. Function block **168** de-normalizes the image information and function block **172** interleaves the image information into a proper display format for ultimate storage and/or display at **177**.

**Detailed Logic of Invention**

As discussed above, the invention is a means for improving compression and decompression by reducing Inverse Discrete Cosine Transformation (IDCT) computation. The reduction in computation is achieved by recognizing the extent that a row-column block of coefficients is composed of non-zero values. The non-zero row-column values are used to reduce the size of the coefficient block that is processed. To understand the processing in accordance with the subject invention, an example is provided below.

**Two-Pass IDCT Processing**

**Pass # 1**

Multiplication of the 8 X 8 block of coefficients against a pre-generated cosine lookup table of dimension 8 X 8 resulting in a first pass result of dimension 8 X 8.

$$
\begin{array}{c}
\begin{matrix} C_{00} & C_{01} & \cdots & C_{07} \\ C_{10} & & & \cdot \\ & \cdot & & \\ & \cdot & & \\ & \cdot & & \\ C_{70} & \cdots & & C_{77} \end{matrix}
\quad X \quad
\begin{matrix} L_{00} & L_{01} & \cdots & L_{07} \\ L_{10} & & & \cdot \\ & \cdot & & \\ & \cdot & & \\ & \cdot & & \\ L_{70} & \cdots & & L_{77} \end{matrix}
\quad = \quad
\begin{matrix} F_{00} & F_{01} & \cdots & F_{07} \\ F_{10} & & & \cdot \\ & \cdot & & \\ & \cdot & & \\ & \cdot & & \\ F_{70} & \cdots & & F_{77} \end{matrix}
\\[2em]
\begin{matrix} 8 \; X \; 8 & \qquad & 8 \; X \; 8 & \qquad & 8 \; X \; 8 \\ \text{coefficient} & & \text{cosine lookup} & & \text{first pass} \\ \text{block} & & \text{table} & & \text{result} \end{matrix}
\end{array}
$$

where,

$$F_{00} = (C_{00} * L_{00}) + (C_{01} * L_{01}) + \ldots + (C_{07} * L_{07})$$
$$F_{10} = (C_{00} * L_{10}) + (C_{01} * L_{11}) + \ldots + (C_{07} * L_{17})$$

$$F_{20} = (C_{00} * L_{20}) + (C_{01} * L_{21}) + \ldots + (C_{07} * L_{27})$$
$$\cdot$$
$$\cdot$$
$$\cdot$$
$$F_{01} = (C_{10} * L_{00}) + (C_{11} * L_{01}) + \ldots + (C_{17} * L_{07})$$
$$F_{11} = (C_{10} * L_{10}) + (C_{11} * L_{11}) + \ldots + (C_{17} * L_{17})$$
$$\cdot$$
$$\cdot$$
$$\cdot$$
$$F_{77} = (C_{70} * L_{70}) + (C_{71} * L_{71}) + \ldots + (C_{77} * L_{77})$$

**Pass # 2**

In the second pass, the coefficient block matrix is replaced with the first pass resultant matrix information. Then, the first pass is repeated with the new coefficient block matrix. Multiplication of the first pass result of dimension 8 * 8 against a pre-generated cosine lookup table of dimension 8 * 8 resulting in a second pass final result of the two-pass IDCT processing, an 8 x 8 matrix.

**Variable Two-Pass IDCT Processing**

The invention reduces the number of computations employed in the two-pass IDCT by only performing the first and second step processing where the input information is predominantly non-zero. One of the characteristics of the zigzag and quantization processing, performed earlier, is that the processing separates the non-zero and zero values into distinct areas of the partially compressed image information. This characteristic is exploited by the invention to avoid processing the bulk of the information which has a zero value.

The "width" of the coefficient block is defined as the longest index into any row which identifies the last non-zero values in the row. After the width of each row is determined, the width of the block is specified as the longest row width. The "height" of a block is determined in a similar manner by determining the longest index into any column which identifies the last non-zero value in the column. For the sample coefficient block shown below, where a, b, c, d and e represent non-zero coefficient values, the block's width = 3 and its height = 2.

$$
\begin{matrix}
A & B & C & 0 & 0 & 0 & 0 & 0 \\
D & E & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0 \\
0 & 0 & 0 & 0 & 0 & 0 & 0 & 0
\end{matrix}
$$

Since it is established that all of the other coefficients other than $C_{00}$, $C_{01}$, $C_{02}$, $C_{10}$, and $C_{11}$, and $C_{12}$ have values equal to zero, the first pass of the IDCT can be re-written as:

$$
\begin{matrix}
C_{00} & C_{01} & C_{02} \\
C_{10} & C_{11} & C_{12}
\end{matrix}
\quad X \quad
\begin{matrix}
L_{00} & L_{01} & L_{02} \\
L_{10} & L_{11} & L_{12} \\
L_{20} & L_{21} & L_{22} \\
L_{30} & L_{31} & L_{32} \\
L_{40} & L_{41} & L_{42} \\
L_{50} & L_{51} & L_{52} \\
L_{60} & L_{61} & L_{62} \\
L_{70} & L_{71} & L_{72}
\end{matrix}
\quad = \quad
\begin{matrix}
F_{00} & F_{01} \\
F_{10} & F_{11} \\
F_{20} & F_{21} \\
F_{30} & F_{31} \\
F_{40} & F_{41} \\
F_{50} & F_{51} \\
F_{60} & F_{61} \\
F_{70} & F_{71}
\end{matrix}
$$

where,

$$F_{00} = (C_{00} * L_{00}) + (C_{01} * L_{01}) + (C_{02} * L_{02})$$
$$F_{01} = (C_{10} * L_{00}) + (C_{11} * L_{01}) + (C_{12} * L_{02})$$
$$F_{10} = (C_{00} * L_{10}) + (C_{01} * L_{11}) + (C_{02} * L_{12})$$
$$F_{11} = (C_{10} * L_{10}) + (C_{11} * L_{11}) + (C_{12} * L_{12})$$

.

.

.

$$F_{70} = (C_{00} * L_{70}) + (C_{01} * L_{71}) + (C_{02} * L_{72})$$
$$F_{71} = (C_{10} * L_{70}) + (C_{11} * L_{71}) + (C_{12} * L_{72})$$

Now, the second pass of the IDCT uses the resultant matrix of the first pass as input as described above. Evaluating the width and height of the first pass result yields a width = 2 and a height = 8. In all cases, the width of the input to the second pass is the same as the height of the input to the first pass. Further, the height of the input to the second pass is always eight (8). Thus, the processing of the second pass appears below.

**Second Pass**

$$
\begin{array}{cc}
F_{00} \ F_{01} \\
F_{10} \ F_{11} \\
F_{20} \ F_{21} \\
F_{30} \ F_{31} \\
F_{40} \ F_{41} \\
F_{50} \ F_{51} \\
F_{60} \ F_{61} \\
F_{70} \ F_{71}
\end{array}
*
\begin{array}{cc}
L_{00} \ L_{01} \\
L_{10} \ L_{11} \\
L_{20} \ L_{21} \\
L_{30} \ L_{31} \\
L_{40} \ L_{41} \\
L_{50} \ L_{51} \\
L_{60} \ L_{61} \\
L_{70} \ L_{71}
\end{array}
=
\begin{array}{cccc}
R_{00} \ R_{01} \ \cdots \ R_{07} \\
R_{10} \ R_{11} \ \cdots \ R_{17} \\
R_{20} \ R_{21} \ \cdots \ R_{27} \\
R_{30} \ R_{31} \ \cdots \ R_{37} \\
R_{40} \ R_{41} \ \cdots \ R_{47} \\
R_{50} \ R_{51} \ \cdots \ R_{57} \\
R_{60} \ R_{61} \ \cdots \ R_{67} \\
R_{70} \ R_{71} \ \cdots \ R_{77}
\end{array}
$$

Where,

$$R_{00} = (F_{00} * L_{00}) + (F_{01} * L_{01})$$
$$R_{01} = (F_{10} * L_{00}) + (F_{11} * L_{01})$$
$$R_{02} = (F_{20} * L_{00}) + (F_{21} * L_{01})$$

$$\cdot$$
$$\cdot$$
$$\cdot$$

$$R_{10} = (F_{00} * L_{10}) + (F_{01} * L_{11})$$
$$R_{11} = (F_{10} * L_{10}) + (F_{11} * L_{11})$$

$$\cdot$$
$$\cdot$$
$$\cdot$$

$$R_{20} = (F_{00} * L_{20}) + (F_{01} * L_{21})$$

$$\cdot$$

$$\cdot$$
$$\cdot$$

$$R_{77} = (F_{70} * L_{70}) + (F_{71} * L_{71})$$

and the '$R_{xy}$' values represent the normalized component values that are normalized and combined with other de-normalized component values in the interleaver function and passed back to the host processor as a block of pixels.

The computation savings realized by employing the invention are significant. The general two-dimensional IDCT requires 512 multiply-accumulate (MAC) operations per pass for a total of 1024 MAC operations. The invention always results in fewer MACs, except when the input sub-block has a width $= 8$ and a height $= 8$. In this special case, the variable IDCT performs in a similar manner as prior IDCT processors. In our example disclosed above for a 3 X 2 block of non-zero information, only 48 MACs are required for the first pass and 128 MACs for the second pass for a total of 176 MACs for the entire compression. This compares favorably to the 1024 MAC operations of the prior art teaching.

While the invention has been described in terms of a preferred embodiment in a specific system environment, those skilled in the art recognize that the invention can be practiced, with modification, in other and different hardware and software environments within the spirit and scope of the appended claims.

**Claims**

1. An apparatus for decompressing image information, comprising:
   (a) first processor means for parsing the image information into partially de-compressed information;
   (b) second processor means for identifying non-zero value dimensions for each block of partially decompressed information and decompressing each of the blocks of partially decompressed information based on the non-zero value dimensions into decompressed image information; and
   (c) storage means for saving the decompressed information.

2. Apparatus as recited in claim 1, wherein said first processor means includes a Huffman decoder.

3. Apparatus as recited in claim 1 or claim 2, wherein said second processor means includes an un-zigzager.

4. Apparatus as recited in any one of claims 1 to 3, wherein said second processor means includes a dequantizer.

**5.** Apparatus as recited in any one of the preceding claims, wherein second processor means includes an inverse discrete transformer.

**6.** Apparatus as recited in any one of the preceding claims, wherein said second processor means includes a normalizer.

**7.** Apparatus as recited in any one of the preceding claims, wherein second processor means includes an interleaver.

**8.** A method for decompressing image information, comprising the steps of:
(a) parsing the image information into partially de-compressed information;
(b) identifying non-zero value dimensions for each block of partially decompressed information and decompressing each of the blocks of partially decompressed information based on the non-zero value dimensions into decompressed image information; and
(c) storing the decompressed image information.

**9.** A method according to claim 8, wherein said identified non-zero value dimensions are used to extract from each block of partially decompressed information a minimum dimension information block for processing in step (b), which contains all of the non-zero value information of the original information block.

**10.** A method according to claim 9, wherein step (b) includes inverse discrete transformation of the partially decompressed information, which is carried out using said minimum dimension information blocks.

**FIG. 1**

EP 0 537 932 A2

DATA HIGH 60

DATA

I/O BUS 10

DATA LOW 70

ADDR HIGH 40

HOST COMMAND REG 20

HOST STATUS REG 30

SHARED MEMORY 8K X 16 80

TMS 320C25 90

TMS320 CONTROL REG 110

TMS320 STATUS REG 120

ADDR LOW 50

ADDRESS

CONTROL LOGIC 100

CONTROL

12

**BLOCK DIAGRAM**

- - - - - CONTROL BUS

━━━━ ADDRESS BUS

──── DATA BUS

**FIG. 2**

**CPU (PC)** ⌐328

(JPEG Compressed
Image Data) ⌐320

↓

| Parser | ⌐322

↓

| Huffman Decoder |
324 ⌐

**DSP (ACPA)** ⌐332

330 ⌐

344 ⌐

→ | Receive from Host | ⌐334

↓

336 ⌐ | UnZigZag
&
Dequantize
&
Calculate Width & Height |

↓

338 ⌐ | Variable IDCT |

↓

| Interleaver |
340 ⌐

↓

326 ⌐

| Output Handler | ← ⌐346 | Return to CPU | ⌐342

↓

(Image Data)

**FIG. 3**

**FIG. 4**
**PRIOR ART**

```
        ┌─────────────────┐
        │   COMPRESSED    │
        │      FILE       │
        │      140        │
        └────────┬────────┘
                 │
        ┌────────▼────────┐
        │     PARSER      │
        │      142        │
        └────────┬────────┘
```

Q TABLES 128     IMAGE INFO 126     HUFFMAN TABLES 130

HUFFMAN DECODER 144

NO ← MDU? 148 → YES

UN-ZIG ZAG DE-QUANTIZE NON-ZERO VALUE DIMENSIONS 154

FIRST PASS IDCT 158

SECOND PASS IDCT 162

8 X 8 BLOCK 164

DE-NORMALIZE 168

INTERLEAVE 172

8 X 8 176

DISPLAY OR STORE 177

**FIG. 5**

14

200

| 50 | 40 | 20 | 10 | 0 | 0 | 0 | 0 |
|----|----|----|----|---|---|---|---|
| 45 | 15 | 0 | 0 | | | | |
| 25 | 0 | 0 | | | | | |
| 0 | 0 | | | | | | |
| 0 | | | | | | | |
| 0 | | | | | | | |
| 0 | | | | | | | |
| 0 | | | | | | | |

232 ⟶ Normal (or "Row/Column") string representation
of the 8 x 8 matrix:

50, 40, 20, 10, 0, 0, 0, 0, 45, 15, 0, 0, 0, 0, 0, 0, 25, 0, 0, . . .

234 ⟶ Zigzag string representation of the 8 x 8 matrix:

50, 40, 45, 25, 15, 20, 10, 0, 0, . . .

236 ⟶ Zigzag string after run-length encoding:

50, 40, 45, 25, 15, 20, 10

FIG. 6